Europäisches Patentamt

European Patent Office

Office européen des brevets

(19)

(11) Veröffentlichungsnummer: **0 293 562 B1**

# EUROPÄISCHE PATENTSCHRIFT

(12)

(45) Veröffentlichungstag der Patentschrift: **27.10.93**

(21) Anmeldenummer: **88103695.8**

(22) Anmeldetag: **09.03.88**

(51) Int. Cl.⁵: **C12G 1/02**

(54) Verfahren zur Zubereitung von Wein.

(30) Priorität: **16.03.87 DE 3708465**

(43) Veröffentlichungstag der Anmeldung:
**07.12.88 Patentblatt 88/49**

(45) Bekanntmachung des Hinweises auf die
Patenterteilung:
**27.10.93 Patentblatt 93/43**

(84) Benannte Vertragsstaaten:
**AT CH DE ES FR GR IT LI**

(56) Entgegenhaltungen:
**WO-A-88/06006      AU-A- 5 734 073**
**DE-A- 2 808 242      FR-A- 2 358 179**
**FR-A- 2 442 716      FR-A- 2 568 820**

(73) Patentinhaber: **KOHLENSÄUREWERK
DEUTSCHLAND GMBH
Melkenweg 1
D-53557 Bad Hönningen(DE)**

(72) Erfinder: **Grünhoff, Ulrich, Dipl.-Ing.
Marktstrasse 12
D-5462 Bad Hönningen(DE)**
Erfinder: **Schneider, Bernhard
Hauptstrasse 182
D-5462 Bad Hönningen(DE)**

(74) Vertreter: **Lauer, Dieter, Dr.
c/o Kali-Chemie Aktiengesellschaft,
Hans-Bockler-Allee 20
D-30173 Hannover (DE)**

**Beschreibung**

Die vorliegende Erfindung betrifft ein Verfahren zur Zubereitung von Wein.

In herkömmlichen Verfahren wird das aus der Lese resultierende Traubengut zunächst aufbereitet, wobei u.a. im Entrapper von den Stielen getrennt wird. Des weiteren wird das resultierende Traubengut in der Aufbereitungsstufe durch Aufmahlen in eine Maische überführt, die dann in einem Vorratstank zwischengelagert wird. Nach einer Wartezeit wird dann Most gewonnen durch Vorentsaften und/oder durch Keltern. Die vereinigten Mostströme werden dann weiteren Behandlungsstufen wie Klärung, Gärung etc. unterworfen. Die Qualität des Weines wird in üblichen Verfahren dabei im wesentlichen durch die Führung der Gärung bestimmt.

Ein Verfahren zur Zubereitung von Wein wird in der DE-A 28 08 242 offenbart. Dabei wird die Maische und der Most mit $CO_2$ angereichert, und zwar direkt nach der Zerstörung der Beerenhaut, d.h. nach der Maischebereitung, die in konventioneller Weise erfolgt, nämlich durch Raspeln.

Überraschenderweise wurde erfindungsgemäß gefunden, daß bereits durch Einschaltung einer einfachen Maßnahme bei der Aufbereitung die Qualität des später resultierenden Weines erheblich beeinfluß werden kann: Diese Maßnahme besteht darin, daß man bereits bei der Maischebereitung unter Zufuhr von Kohlendioxid arbeitet, wobei man die Maische in an sich bekannter Weise durch Druckbeaufschlagung des Traubengutes unter Verwendung von Kohlendioxid als Druckgas und anschließender explosionsartiger Entspannung über ein Expansionsventil bereitet.

Zur Zubereitung der Maische bedient man sich des an sich bekannten Verfahrens der Explosionszerkleinerung. Erfindungsgemäß wird dazu das Traubengut, das ggf. bereits mit Kohlendioxid, vorzugsweise gasförmiges Kohlendioxid, versetzt wurde, in eine Druckkammer eingeführt, dort nach Verschließen der Druckkammer mit Kohlendioxid beaufschlagt, vorzugsweise auf Drucke im Bereich von 1.1 bis 10 bar und anschließend explosionsartig über ein Expansionsventil in eine Entspannungskammer entspannt. Die resultierende Maische wird dann wie ausgeführt in den Lagertank überführt, was mit üblichen Fördereinrichtungen wie z.B. mit einer Pumpe erfolgen kann.

Ein Verfahren zur Zubereitung von Wein unter Anwendung eines Druckexpansionsverfahrens zur Traubenzerkleinerung wird auch in der älteren, nicht vorveröffentlichten internationalen Patentanmeldung WO 88/06006 offenbart. Diese Anmeldung bestimmt u.a. die Vertragsstaaten AT, CH, DE, FR und IT, nicht jedoch die Vertragsstaaten ES und GR. Das im Zusammenhang mit der Weinbereitung offenbarte Druckexpansionsverfahren arbeitet nicht mit $CO_2$, sondern mit Luft/$CO_2$/$N_2$; der Most wird in wenigen Minuten vom Trester abgetrennt.

Das für die Maischebereitung benötigte Kohlendioxid kann dem Traubengut vor oder direkt in der Zerkleinerungsanlage zugeführt werden, wobei es gasförmig oder in fester Form. z.B. als Kohlensäureschnee oder als Kohlensäurepellets eingesetzt werden kann. Es ist dabei möglich, aus der Gärung erhaltenes Kohlendioxid rückzuführen. Bevorzugt wird aber der Einsatz von festem oder druckentspanntem, abgekühlten Kohlendioxid, da durch die dann eintretende Kühlung des Traubengutes eine besonders schonende Weiterbehandlung möglich ist. Die Temperatur der so gewonnenen Maische liegt dann im Bereich von etwa 0 °C bis 15 °C.

In einer weiteren Variante der Erfindung wird die resultierende Maische unter Einwirkung von Kohlendioxid von der Aufbereitungsstufe in einen Vorratstank überführt, wobei bei Bedarf weiteres Kohlendioxid zugesetzt werden kann.

Zur Herstellung von Weißwein wird gemäß einer Variante der Erfindung die Maische nach Überführung in den Lagertank vorentsaftet und gekeltert. Dabei zeigt sich, daß nach dem erfindungsgemäßen Verfahren überraschenderweise signifikant höhere Mostanteile als Vorsaft abgezogen werden können, was zu einer Kapazitätserhöhung und Qualitätserhöhung, bzw. Kostenreduzierung in der Entsaftungsstufe führt.

Der gewonnene Vorsaft/Saft wird anschließend in üblicher Weise vergoren. Im Rahmen der Erfindung wird mit Fermentation die Einwirkung nur der natürlich vorhandenen Enzyme und mit Gärung die Einwirkung von natürlich vorhandenen und/oder zugesetzten Enzymen (Hefen) bezeichnet.

Erfindungsgemäß gewonnener Weißwein zeichnet sich gegenüber einem nach dem Stand der Technik gewonnenen Wein durch besondere Vorteile aus wie z.B. höheren Gesamtalkohol-Gehalt, höheren zuckerfreien Extrakt, geringere biologische Anfälligkeit.

In einer anderen, bevorzugten Variante, zur Gewinnung von Rotwein, wird der Traubenmost direkt auf der Maische vergärt, bevorzugt fermentiert und anschließend abgepreßt. Der so gewonnene Saft oder Wein kann gewünschtenfalls noch einer Nachgärung unterzogen werden. Im Gegensatz zu an sich bekannten Maischegärverfahren, bei denen üblicherweise ca. 8 Tage auf der Maische vergoren wird, benötigt man erfindungsgemäß nur bis zu 4 Tage, vorzugsweise 2 bis 4 Tage. Solche Zeiten sind mit üblichen Maischegärverfahren nur durch zusätzliche Anwendung von Druck und/oder Temperatur erzielbar. Maßnahmen, die beim erfindungsgemäßen Verfahren zwar auch möglich, aber nicht notwendig sind.

Die Gärung nach dem erfindungsgemäßen Verfahren verläuft insgesamt ruhiger und liefert überraschenderweise einen qualitativ hochwertigen Wein, der sich z.B. durch höheren Alkoholgehalt und höhere Extraktgehalte, insbesondere höhere zuckerfreie Extraktgehalte auszeichnet, wodurch u.a. das Bouquet des Weines günstig beeinflußt wird.

Ein besonderer Vorteil des erfindungsgemäßen Verfahrens liegt darin, daß es gestattet, Rotweine mit sehr guter Farbtiefe zu erzielen. So ist es möglich, aus Traubengut mit geringer Farbtiefe und hohem Gerbstoffanteil nach dem erfindungsgemäßen Verfahren einen Wein zu erhalten, der sich gegenüber Wein, der aus dem gleichen Traubengut, jedoch nach konventionellen Verfahren erhalten wurde, durch deutliche Farb- und Geschmacksvorteile auszeichnet. Auch dieser, nach den erfindungsgemäßen Verfahren erhaltene Wein zeichnet sich durch eine geringe biologische Anfälligkeit aus.

Es ist zwar bereits ein Verfahren bekannt, Traubengut z.B. gemäß DE-PS 26 32 045 mittels Explosionszerkleinerung aufzuschließen und sofort durch Zentrifugieren abzutrennen. Als Druckgas wird dort aber insbesondere Druckluft verwendet und es war nicht vorhersehbar, daß bei Einsatz von Kohlendioxid in der Zerkleinerungsstufe die geschilderten, überraschenden Vorteile am vergorenen Wein erzielt werden können.

Die nachfolgenden Beispiele sollen die Erfindung näher charakterisieren, ohne ihren Umfang zu begrenzen.

Beispiel 1: Zubereitung von Weißwein

Trauben der Rebsorte Optima wurden in einer einstufigen Druckexpansionsvorrichtung (Hersteller Firma KWD, Bad Hönningen) mit gasförmigem Kohlendioxid bei Drucken von etwa 3 bar explosionszerkleinert und direkt in einen Zwischentank überführt. Aus diesem Tank wurde zunächst Vorsaft abgezogen. Die Ausbeute an Vorsaft lag 9,8 % höher als in einem Parallelversuch mit üblicher Traubenmahlung. Nach einer Standzeit von 24 Stunden wurde zur Saftgewinnung abgepreßt und die vereinigten Saftströme wurden 9 Tage lang bei Raumtemperatur vergoren. Der gewonnene Wein zeigte ein reiches Bouquet und ergab folgende Analysendaten:
Gesamtalkohol: 80,7 g/l, zuckerfreier Extrakt 22,0 g/l.

Ein ansonsten gleichbehandelter, aber in an sich bekannter Weise durch übliche Traubenvermahlung gewonnener Wein ergab folgende Ergebnisse bei schmalerem Bouquet:
Gesamtalkohol: 75,6 g/l, zuckerfreier Extrakt 21,6 g/l.

Beispiel 2: Bereitung von Rotwein

Traubengut der Rebsorte Portugieser wurde wie in Beispiel 1 behandelt. Die erzeugte Maische, die bei einer Umgebungstemperatur von 20 °C mit etwa 14 °C aus der Druckexpansionsvorrichtung austrat, wurde unter Kohlendioxidgas in einen Tank überführt, dort bei Raumtemperatur 3,5 Tage lang fermentiert und anschließend wurde der erzeugte Wein abgetrennt. Dieser zeichnete sich durch eine erheblich verbesserte Farbkraft und fehlenden Bittermandelgeschmack gegenüber einem üblich hergestellten, 8 Tage lang fermentierten Wein aus. Die Analyse ergab folgendes Bild

| | Alkohol g/l | zuckerfreier Extrakt g/l |
|---|---|---|
| erfindungsgemäß | 66,3 | 27,2 |
| Vergleich | 58,5 | 25,9 |

Beispiel 3: Bereitung von Rotwein

Analog zu Beispiel 2 wurden Spätburgunder-Trauben verarbeitet. Der ebenfalls sehr farbtiefe Wein ergab folgende Analysenwerte

|  | Alkohol g/l | Restzucker g/l | zuckerfreier Extrakt g/l |
|---|---|---|---|
| erfindungs- gemäß | 78,5 | 4,5 | 28.9 |
| Vergleich | 75.2 | 1,5 | 25,1 |

Eine Nachgärung gestattete, den Restzuckeranteil weiter abzubauen unter Erhöhung der Alkoholausbeute, bei ansonsten unverändert hochbleibender Qualität des Weines.

**Patentansprüche**

**Patentansprüche für folgende Vertragsstaaten : AT, CH, DE, FR, IT**

**1.** Verfahren zur Zubereitung von Wein, insbesondere Rotwein, umfassend die Stufen der Maische-Bereitung und weitere, übliche Stufen, wie Vorentsaften und/oder Pressen und Gärung unter Zufuhr von Kohlendioxid, dadurch gekennzeichnet, daß man bereits bei der Maische-Bereitung unter Zufuhr von Kohlendioxid arbeitet, wobei man die Maische in an sich bekannter Weise durch Druckbeaufschlagung des Traubengutes unter Verwendung von Kohlendioxid als Druckgas und anschließender explosionsartiger Entspannung über ein Expansionsventil bereitet, mit Ausnahme eines Verfahrens, bei welchem die Maische durch Druckbeaufschlagung des Traubengutes mittels Luft/$CO_2$/$N_2$ als Druckgas, anschließender explosionsartiger Entspannung und Abtrennung von Most und Trester binnen weniger Minuten bereitet wird.

**2.** Verfahren gemäß Anspruch 1, dadurch gekennzeichnet, daß man die aus der Aufbereitung resultierende Maische unter Einwirkung von Kohlendioxid in einen Vorratstank überführt.

**3.** Verfahren gemäß einem der Ansprüche 1 bis 2, dadurch gekennzeichnet, daß man zur Zubereitung von Weißwein die Maische vorentsaftet, abpreßt und anschließend in üblicher Weise vergärt.

**4.** Verfahren gemäß einem der Ansprüche 1 bis 2, dadurch gekennzeichnet, daß man zur Zubereitung von Rotwein den Traubenmost direkt auf der Maische vergärt und danach abpreßt und gegebenenfalls weiter vergärt.

**5.** Verfahren gemäß Anspruch 4, dadurch gekennzeichnet, daß man die Maische bis zu 4 Tagen, vorzugsweise 2 bis 4 Tage vergärt.

**Patentansprüche für folgende Vertragsstaaten : ES, GR**

**1.** Verfahren zur Zubereitung von Wein, insbesondere Rotwein, umfassend die Stufen der Maische-Bereitung und weitere, übliche Stufen, wie Vorentsaften und/oder Pressen und Gärung unter Zufuhr von Kohlendioxid, dadurch gekennzeichnet, daß man bereits bei der Maische-Bereitung unter Zufuhr von Kohlendioxid arbeitet, wobei man die Maische in an sich bekannter Weise durch Druckbeaufschlagung des Traubengutes unter Verwendung von Kohlendioxid als Druckgas und anschließender explosionsartiger Entspannung über ein Expansionsventil bereitet.

**2.** Verfahren gemäß Anspruch 1, dadurch gekennzeichnet, daß man die aus der Aufbereitung resultierende Maische unter Einwirkung von Kohlendioxid in einen Vorratstank überführt.

**3.** Verfahren gemäß einem der Ansprüche 1 bis 2, dadurch gekennzeichnet, daß man zur Zubereitung von Weißwein die Maische vorentsaftet, abpreßt und anschließend in üblicher Weise vergärt.

**4.** Verfahren gemäß einem der Ansprüche 1 bis 2, dadurch gekennzeichnet, daß man zur Zubereitung von Rotwein den Traubenmost direkt auf der Maische vergärt und danach abpreßt und gegebenenfalls weiter vergärt.

**5.** Verfahren gemäß Anspruch 4, dadurch gekennzeichnet, daß man die Maische bis zu 4 Tagen, vorzugsweise 2 bis 4 Tage vergärt.

**Claims**
**Claims for the following Contracting States : AT, CH, DE, FR, IT**

**1.** A method for preparing wine, in particular red wine, comprising the stages of preparation of the mash and additional conventional stages, such as preliminary juice extraction and/or pressing and fermentation with carbon dioxide being supplied, characterised in that one operates with carbon dioxide being supplied as early as in the preparation of the mash, the mash being prepared in known manner by the action of pressure on the grapes using carbon dioxide as the compressed gas and subsequent explosive pressure relief via an expansion valve, with the exception of a process in which the mash is prepared by the action of pressure on the grapes by means of air/$CO_2$/$N_2$ as the compressed gas, subsequent explosive pressure relief and separation of must and pomace within a few minutes.

**2.** A method according to Claim 1, characterised in that the mash resulting from the processing is transferred into a storage tank under the action of carbon dioxide.

**3.** A method according to one of Claims 1 to 2, characterised in that in order to prepare white wine the mash undergoes preliminary juice extraction, is pressed and then fermented in conventional manner.

**4.** A method according to one of Claims 1 to 2, characterised in that in order to prepare red wine the grape must is fermented directly on the mash and is then pressed and optionally fermented further.

**5.** A method according to Claim 4, characterised in that the mash is fermented far up to 4 days, preferably 2 to 4 days.

**Claims for the following Contracting States : ES, GR**

**1.** A method for preparing wine, in particular red wine, comprising the stages of preparation of the mash and additional conventional stages, such as preliminary juice extraction and/or pressing and fermentation with carbon dioxide being supplied, characterised in that one operates with carbon dioxide being supplied as early as in the preparation of the mash, the mash being prepared in known manner by the action of pressure on the grapes using carbon dioxide as the compressed gas and subsequent explosive pressure relief via an expansion valve.

**2.** A method according to Claim 1, characterised in that the mash resulting from the processing is transferred into a storage tank under the action of carbon dioxide.

**3.** A method according to one of Claims 1 to 2, characterised in that in order to prepare white wine the mash undergoes preliminary juice extraction, is pressed and then fermented in conventional manner.

**4.** A method according to one of Claims 1 to 2, characterised in that in order to prepare red wine the grape must is fermented directly on the mash and is then pressed and optionally fermented further.

**5.** A method according to Claim 4, characterised in that the mash is fermented for up to 4 days, preferably 2 to 4 days.

**Revendications**
**Revendications pour les Etats contractants suivants : AT, CH, DE, FR, IT**

**1.** Procédé de fabrication de vin , en particulier de vin rouge , comprenant les étapes de préparation du moût et d'autres étapes usuelles, telles qu'extraction préliminaire du jus et/ou pressurage et fermentation avec apport d'anhydride carbonique , caractérisé en ce que , déjà lors de la préparation du moût , on travaille avec apport d'anhydride carbonique , en préparant le moût , d'une façon connue en soi, par application d'une pression sur le jus de raisin à l'aide de l'anhydride carbonique en tant que gaz de pression, et détente explosive subséquente par une vanne de détente, à l'exception d'un procédé dans lequel le moût est préparé par application d'une pression sur le jus de raisin à l'aide d'air/$CO_2$/$N_2$ en tant que gaz de pression, détente explosive subséquente et séparation du moût et du marc en l'espace de quelques minutes.

2. Procédé selon la revendication 1, caractérisé en ce que le moût résultant de la préparation est transféré dans une cuve de stockage, sous l'action de l'anhydride carbonique.

3. Procédé selon la revendication 1 ou 2 , caractérisé en ce que , pour la fabrication de vin blanc , on extrait au préalable le jus pour obtenir le moût , on le presse et ensuite on fait fermenter à la manière usuelle .

4. Procédé selon la revendication 1 ou 2 , caractérisé en ce que , pour la fabrication de vin rouge, on fait fermenter directement le moût de raisin sur la vendange et ensuite on le presse et éventuellement on le fait fermenter à nouveau .

5. Procédé selon la revendication 4 , caractérisé en ce que l'on fait fermenter le moût pendant 4 jours, de préférence pendant 2 à 4 jours.

**Revendications pour les Etats contractants suivants : ES, GR**

1. Procédé de fabrication de vin, en particulier de vin rouge , comprenant les étapes de préparation du moût et d'autres étapes usuelles, telles qu'extraction préliminaire du jus et/ou pressurage et fermentation avec apport d'anhydride carbonique, caractérisé en ce que, déjà lors de la préparation du moût , on travaille avec apport d'anhydride carbonique , en préparant le moût , d'une façon connue en soi, par application d'une pression sur le jus de raisin à l'aide d'anhydride carbonique en tant que gaz de pression, et détente explosive subséquente par une vanne de détente .

2. Procédé selon la revendication 1, caractérisé en ce que le moût résultant de la préparation est transféré dans une cuve de stockage , sous l'action de l'anhydride carbonique .

3. Procédé selon la revendication 1 ou 2, caractérisé en ce que, pour la fabrication de vin blanc , on extrait au préalable le jus pour obtenir le moût , on le presse et ensuite on fait fermenter à la manière usuelle.

4. Procédé selon la revendication 1 ou 2, caractérisé en ce que , pour la fabrication de vin rouge , on fait fermenter directement le moût de raisin sur la vendange et ensuite on le presse et éventuellement on le fait fermenter à nouveau.

5. Procédé selon la revendication 4 , caractérisé en ce que l'on fait fermenter le moût pendant 4 jours , de préférence pendant 2 à 4 jours.